Europäisches Patentamt

European Patent Office

Office européen des brevets

(19)

(11) **EP 0 809 532 B1**

(12) **EUROPÄISCHE PATENTSCHRIFT**

(45) Veröffentlichungstag und Bekanntmachung des Hinweises auf die Patenterteilung:
**21.10.1998 Patentblatt 1998/43**

(21) Anmeldenummer: 96904807.3

(22) Anmeldetag: **17.02.1996**

(51) Int. Cl.$^6$: **B01J 20/10**, B01J 20/12, C11B 3/10

(86) Internationale Anmeldenummer:
**PCT/EP96/00672**

(87) Internationale Veröffentlichungsnummer:
**WO 96/26005 (29.08.1996 Gazette 1996/39)**

(54) **ADSORBENS ZUR BEHANDLUNG VON ÖLEN UND/ODER FETTEN**

ADSORBENT FOR TREATMENT OF OILS AND/OR FATS

ADSORBANT POUR LE TRAITEMENT D'HUILES ET/OU DE GRAISSES

(84) Benannte Vertragsstaaten:
**BE DE FR GB IT NL SE**

(30) Priorität: **18.02.1995 DE 19505579**

(43) Veröffentlichungstag der Anmeldung:
**03.12.1997 Patentblatt 1997/49**

(73) Patentinhaber: **SÜD-CHEMIE AG**
**D-80333 München (DE)**

(72) Erfinder:
 • **BUCKL, Wolfgang**
  **D-85413 Hörgertshausen (DE)**
 • **EBERT, Hermann**
  **D-84036 Landshut (DE)**
 • **EICKE, Helmut**
  **D-85368 Moosburg (DE)**

 • **SCHALL, Norbert**
  **D-83465 Langenpreising (DE)**
 • **ZSCHAU, Werner**
  **D-82237 Steinebach (DE)**
 • **HÄHN, Reinhard**
  **D-84186 Vilsheim (DE)**

(74) Vertreter:
 **Reitzner, Bruno, Dr. et al**
 **Patentanwälte Dipl.-Ing. R. Splanemann**
 **Dr. B. Reitzner, Dipl.-Ing. K. Baronetzky**
 **Tal 13**
 **80331 München (DE)**

(56) Entgegenhaltungen:
 **EP-A- 0 376 406      WO-A-92/19533**
 **FR-A- 2 103 330      FR-A- 2 127 022**
 **US-A- 5 369 069**

**Beschreibung**

Die Erfindung betrifft ein Adsorbens, das insbesondere zur Behandlung von mineralischen, pflanzlichen und/oder tierischen Ölen und/oder Fetten, insbesondere zur Entfernung von Farbstoffen, geeignet ist.

Adsorbentien mit austauschfähigen Kationen sind für diesen Zweck bereits bekannt, sie gehören insbesondere drei Gruppen an:

1. Naturaktiven Bleicherden.

Seit Mitte des 19. Jahrhunderts werden sogenannte "Fullererden" zur Reinigung von pflanzlichen Ölen, tierischen Fetten und Mineralölen verwendet. Hierunter sind Bentonite (insbesondere Ca-Bentonite) bevorzugt saurer Genese, aber auch natürliche Gemische aus Palygorskit und Smektit ebenfalls bevorzugt mit saurer Genese zu verstehen. Diese naturaktiven Tone werden in der Regel nur getrocknet und vermahlen. Bezüglich ihrer Bleichaktivität in Pflanzen- und Mineralölen besteht somit eine große Abhängigkeit zu den naturgegebenen Eigenschaften. Gegebenenfalls werden diese Tone mit geringen Mengen Säure modifiziert, wodurch sich die Adsorptionswirkung in Grenzen optimieren läßt (EP-A-0 398 636).

2. Säureaktivierte Bentonite

Seit etwa 1908 sind säureaktivierte Bentonite auf dem Markt, die sich in der Wirkung den natürlichen "Fullererden" überlegen zeigten (O. Eckart, Die Bleicherde, Seite 9, (1929) Verlag Serger + Hempel, Braunschweig). Säureaktivierte Bentonite (Bleicherden) werden durch Kochen von Bentonitsuspensionen mit Mineralsäuren (z.B. $H_2SO_4$, HCl) hergestellt.

Das Hauptmineral Montmorillonit des Rohstoffs Bentonit ist ein natürliches, quellfähiges Schichtsilicat, das aus stapelförmig übereinander angeordneten Silicatlamellen aufgebaut ist. Jede Lamelle besteht aus zwei $(SiO_4)$-Tetraederschichten, zwischen denen sich eine $(Al(OH)_4O_2)$-Oktaederschicht befindet. Montmorillonit ist ein sogenanntes dioktaedrisches Schichtsilicat, d. h. von drei möglichen Oktaederlücken sind nur zwei mit Al-Ionen besetzt. Die Al-Ionen in den Oktaederlücken können durch zweiwertige Kationen, wie Mg-Ionen, isomorph ersetzt sein. Der Ersatz des dreiwertigen Al-Ions durch das zweiwertige Mg-Ion führt zu einer negativen Überschußladung im Kristall. Diese negative Überschußladung wird zwischen den Silicatlamellen durch Kationen wie $Na^+$, $Mg^{2+}$, $Ca^{2+}$ ausgeglichen, so daß insgesamt Elektroneutralität besteht. Die zwischen den Schichten befindlichen Kationen sind durch andere Kationen austauschbar weshalb Bentonite Kationenaustauscher sind.

Bei der Säureaktivierung erfolgt der Säureangriff in der Oktaederschicht der Silicatlamelle. Hierbei werden die in der Oktaederschicht befindlichen Kationen, wie $Al^{3+}$, $Mg^{2+}$ und $Fe^{3+}$ herausgelöst. Die austauschfähigen Kationen bestehen nach der Säureaktivierung im wesentlichen aus $Al^{3+}$-Ionen (20-50% der Ionenumtauschfähigkeit (IUF)), $Mg^{2+}$- und $Ca^{2+}$-Ionen (etwa 30%) und $Fe^{3+}$-Ionen (etwa 10%). Zwischen 10% und 20% der austauschfähigen Kationen liegen als $H_3O^+$ vor, das durch die Säurebehandlung eingetauscht wurde. Je nach Säurebehandlung kann sich das Verhältnis der austauschfähigen Kationen etwas ändern, jedoch ist es nicht möglich, den Anteil an austauschbaren $Al^{3+}$(ausgedrückt in % von der Gesamt-IUF) wesentlich über 50% zu erhöhen.

Nach der Säureaktivierung verbleibt ein Kern, der noch die Montmorillonitstruktur aufweist und der von einer Schicht aus amorpher Kieselsäure (vormals Tetraederschicht der Montmorillonitstruktur) umhüllt ist (vergl. Ullmanns Enzyklopädie der Technischen Chemie Bd. 23, Seite 322 (1983)).

Durch den Säureangriff wird die Kationenumtauschfähigkeit des Bentonits je nach Herkunft von 50 bis 120 mVal/100 g Bentonit in Abhängigkeit von der Intensität des Säureangriffs auf etwa 20 bis 80, insbesondere 30 bis 50 mVal/100 g, herabgesetzt, für die der verbleibende Montmorillonit-Kern verantwortlich ist. Als austauschfähige Kationen findet man vorzugsweise $Ca^{2+}$-, $Mg^{2+}$-, $Al^{3+}$- und $Fe^{3+}$-Ionen zwischen den Schichten. Jeder verwendete Rohton weist hinsichtlich der verbleibenden Kationenumtauschfähigkeit nach der Säurebehandlung ein Optimum hinsichtlich der Bleichaktivität im Pflanzenöl auf.

Die spezifische Oberfläche steigt je nach Rohton zunächst mit zunehmender Säureaktivierung von etwa 40 bis 90 $m^2/g$ auf etwa 180 bis 400 $m^2/g$ an, nimmt aber bei fortschreitendem Säureangriff wieder ab, weil die entstandene amorphe Kieselsäure zu Ketten- und Ringstrukturen vernetzt wird. Die spezifische Oberfläche ist ebenfalls maßgeblich für die Wirkung von Bleicherden in Pflanzenölen und weist ein Optimum auf, das über die Intensität des Säureangriffs beeinflußt wird.

Das Porenvolumen des Rohbentonits wird durch den Säureangriff ebenfalls maßgeblich verändert. Rohbentonite verfügen über ein Porenvolumen < 0,1 ml/g, verteilt in Poren mit einem Durchmesser von 0 bis 80 nm. Rohbentonite, welche bereits von Natur aus eine Bleichaktivität zeigen, zeigen Porenvolumina zwischen 0,15 bis 0,3 ml/g. Mit zunehmendem Säureangriff erhöht sich das Porenvolumen vor allem zugunsten kleiner Poren bis zum Durchmesser von 14 nm. In diesem Bereich kann auch eine zunehmende Bleichaktivität in Pflanzenölen erreicht werden. Mit fortschreitender Säureaktivierung erhöht sich der Anteil der grösseren Poren (>25 nm Porendurchmesser) zu Lasten der kleineren Poren. Gleichzeitig wird eine Abnahme der Bleichaktivität beobachtet. Somit nimmt der Grad der Säureaktivierung auch über das Porenvolumen Einfluß auf die Bleichaktivität des Adsorptionsmittels.

Somit ergibt sich für die Herstellung von säureaktivierter Bleicherde der Schluß, daß eine gute Bleichaktivität in Pflanzenölen nur dann erhalten wird, wenn der Säureangriff so geführt wird, daß im Produkt ein Optimum an Ionenumtauschfähigkeit, spezifischer Oberfläche und Porenvolumen erzeugt wird.

Die Anwesenheit von $H^+$-Ionen und $Al^{3+}$-Ionen gilt als eines der wesentlichen Kriterien zur Beurteilung einer guten Bleicherde. Diese Ionen werden im Verlauf der Behandlung mit Säure zwischen die Schichten eingetauscht. Dies geschieht in der Weise, daß $Al^{3+}$ mit Säure zunächst aus dem Montmorillonitkristall herausgelöst wird, um dann zum Teil zwischen die Schichten über eine Kationenaustauschreaktion eingetauscht zu werden. Der Eintausch der $H_3O^+$-Ionen erfolgt direkt bei der Säurezugabe.

Es besteht ein Bedarf, die Wirksamkeit von Bleicherden in Pflanzenölen weiter zu erhöhen, um geringere Einsatzmengen im Öl zu ermöglichen.

## 3. Synthetische Bleicherden

Die EP-A-0 269 173 beschreibt die Herstellung von synthetischen, thermisch regenerierbaren Bleichmitteln und deren Verwendung zur Bleichung von Pflanzenölen. Aus Na-Silicat und $H_2SO_4$ wird ein Hydrogel hergestellt, dem während der Kristallisation $Al_2(SO_4)_3$-Lösung zugesetzt wird. Das Produkt wird getrocknet und calciniert. Die hohe Ionenumtauschfähigkeit (IUF) des Produktes beträgt 43 mVal/100 g, wobei 32% auf $Na^+$-Ionen, 65% auf $Al^{3+}$-Ionen und 4% auf $Ca^{2+}$-Ionen entfallen. Eine Erhöhung des Anteils der $Al^{3+}$-Ionen durch eine Lenkung der Synthese ist nicht möglich. Die Bleichaktivität des Produktes in Leinöl und Sojaöl ist akzeptabel, jedoch ist das Bleichmittel nicht für die Behandlung von Palmöl geeignet.

In der DE-A-2 036 819 sind Metallsilicate als synthetische Bleichmittel beschrieben. Bespielsweise wird ein Al-Silicat durch Erhitzen von $Al_2(SO_4)_3$ mit Wasserglas hergestellt. Die Fällungsprodukte, die hauptsächlich aus den Metallhydroxiden bestehen, werden durch Trocknung in Metalloxide umgewandelt, welche dann vermahlen werden. Die Zusammensetzung ist durch den Fällungsprozeß in engen Grenzen festgelegt, wobei ein nach der Synthese stattfindender Ionenaustausch nicht beschrieben wird. Das Bleichmittel zeigt in Leinöl und Sojaöl eine akzeptable Bleichaktivität, nicht jedoch in Palmöl.

Aus Ullmann's Enzyklopädie der Technischen Chemie, Band 23, (1977) sind die wichtigsten Tone und Tonmineralien zur Herstellung von Bleicherden, sowie die Eigenschaften von Bleicherde und ihre Verwendung zur Raffination von Ölen beschrieben. Es werden zwar allgemeine Bemerkungen zur Ionenumtauschfähigkeit von Bleicherden gemacht; über die Zusammensetzung, geschweige denn über die Wirkung verschiedener Zwischenschichtkationen werden keine Aussagen gemacht. Insbesondere finden sich keine Hinweise auf die Einlagerung von dreiwertigen Ionen.

Der Erfindung lag die Aufgabe zugrunde, die Bleichwirkung von natürlichen Bleicherden, säureaktivierten Smektiten und synthetischen Bleicherden zu verbessern, insbesondere was die Bleichung von Palmöl betrifft.

Es wurde überraschenderweise gefunden, daß die Bleichaktivität dieser Substanzen, denen die Fähigkeit zum Ionenaustausch gemeinsam ist, verbessert werden kann, indem als Lewis-Säuren wirkende Kationen, insbesondere $Al^{3+}$-Kationen, in die austauschfähigen Stellen eingetauscht werden. Des weiteren können beispielsweise folgende, als Lewis-Säuren wirkende Kationen eingetauscht werden: $Zr^{3+/4+}$; $Sn^{2+/4+}$, $Zn^{2+}$, $Ti^{3+/4+}$, $Co^{2+}$, $Ni^{2+}$, $Fe^{3+}$, $Cr^{3+}$, $B^{3+}$, $Mn^{2+/3+/4+}$.

Gegenstand der Erfindung ist somit ein Adsorbens auf der Basis eines anorganischen Trägermaterials mit austauschfähigen ein und zweiwertigen Kationen, das dadurch gekennzeichnet ist, daß die spezifische Oberfläche des Trägermaterials >100 $m^2$/g, seine Kationenumtauschfähigkeit >30 mVal/100 g, sein Porenvolumen >0,15 ml/g ist, der pH-Wert einer wäßrigen Suspension von 8 g Trägermaterial in 100 ml $H_2O$ <7,5 ist und daß mindestens 60, vorzugsweise mindestens 70%, der austauschfähigen ein- und/oder zweiwertigen Kationen durch als Lewis-Säuren wirkende Kationen, insbesondere $Al^{3+}$-Kationen, ausgetauscht sind.

Als Trägermaterialien für die erfindungsgemäßen Adsorbentien können u.a. verwendet werden

1. Naturaktive Tone auf Smektitbasis mit einer spezifischen Oberfläche von >100 $m^2$/g, einer Kationenumtauschfähigkeit von >30 mVal/100 g, einem Porenvolumen (d=0-80 nm) von >0,15 ml/g, wobei der pH-Wert einer wäßrigen Suspension von 8 g Trägermaterial in 100 ml $H_2O$ <7,5 ist.

2. Säureaktivierte Tonminerale auf Smektitbasis mit einer spezifischen Oberfläche von >200 $m^2$/g, einer Kationenumtauschfähigkeit von 30 bis 50 mVal/100 g, einem Porenvolumen (d = 0-80 nm) von >0,25 ml/g, wobei der pH-Wert einer wäßrigen Suspension von 8 g Trägermaterial in 100 ml $H_2O$ etwa 2 bis 6 betragt.

3. Synthetische Bleicherden auf der Grundlage eines Aluminiumsilicats, das beispielsweise nach folgenden Methoden herstellbar ist:

a) Umsetzung eines Aluminumsalzes mit Wasserglas (Na-Silicat) in der Siedehitze; oder
b) Herstellung eines Hydrogels aus Na-Silicat und Schwefelsäure, wobei ein Aluminiumsalz zum Hydrogel zugegeben wird.

Das Aluminiumsilicat hat eine spezifische Oberfläche von >300 $m^2$/g, vorzugsweise 300 bis 600 $m^2$/g eine Kationenumtauschfähigkeit von etwa 30 bis 60 mVal/100 g, ein Porenvolumen von >0,2 ml/g, wobei der pH-Wert einer wäßrigen Suspension von 8 g Trägermaterial in 100 ml $H_2O$ 3 bis 6 beträgt.

Weiterhin ist Gegenstand der Erfindung ein Verfahren zur Herstellung des vorstehend beschriebenen Adsorbens, das dadurch gekennzeichnet ist, daß man das Trägermaterial mit der Lösung eines Salzes mit einem als Lewis-Säure wirkenden Kation (nachstehend der Einfachheit halber als "Lewis-Säure-Kation" bezeichnet) behandelt, wobei der molare Überschuß an Lewis-Säure-Kationen mindestens das 2-fache der Kationenumtauschfähigkeit des Trägermaterials beträgt, worauf man die überschüssige Salzlösung entfernt, den Rückstand wäscht, trocknet und gegebenenfalls calciniert.

Das Verfahren wird vorzugsweise so durchgeführt, daß man den mit Lewis-Säure-Kationen beladenen Rückstand wäscht, bis der Gehalt an freien Kationen im Waschwasser <100 mg/Liter ist.

Der Eintausch der Lewis-Säure-Kationen erfolgt im allgemeinen durch Dispergieren der Ausgangsmaterialien in Wasser und Zugabe von Lewis-Säure-Salzen im Überschuß. Nach einer ausreichenden Kontaktzeit, bevorzugt bei höherer Temperatur, wird filtriert und gewaschen. Danach wird das erhaltene Adsorbens getrocknet, vermahlen und gegebenenfalls (insbesondere bei synthetischen Bleicherden) calciniert. Die so behandelten Adsorbentien weisen 60 bis 90 %, vorzugsweise 70 bis 90% der Gesamt-Ionenumtauschfähigkeit in Form von umtauschfähigen Lewis-Säure-Kationen, insbesondere $Al^{3+}$-Ionen, gegebenenfalls in Kombination mit anderen Kationen aus der oben genannten Gruppe auf.

Durch diese Behandlung wird eine signifikante Verbesserung der Bleichaktivität des Adsorbens in Pflanzenölen, insbesondere in Leinöl und Palmöl festgestellt, was in der Praxis bedeutet, daß das Adsorbens in geringeren Einsatzmengen verwendet werden kann. Die durch den Eintausch von Lewis-Säure-Kationen erhöhte Lewis-Acidität scheint bei der Ölbleiche eine wichtige Rolle zu spielen.

Voraussetzung ist jedoch, daß anhaftende, überschüssige Salze durch intensives Waschen entfernt werden, damit die Poren des Adsorptionsmittels nicht belegt werden.

Bei den synthetischen Bleicherden erfolgt der Ionenumtausch nach der Synthese des Aluminiumsilicats durch Redispergieren an einer Salzlösung mit Lewis-Säure-Kationen mit einem Kationenüberschuß über einen Zeitraum von 15 Minuten bis 8 Stunden, vorzugsweise über einen Zeitraum von 20 Minuten bis 2 Stunden, bei einer Temperatur von etwa 20 bis 95°C, vorzugsweise von 40 bis 80°C. Nach dem Eintausch der Lewis-Säure-Kationen wird das Produkt im allgemeinen filtriert, in $H_2O$ redispergiert, nochmals filtriert und mit $H_2O$ gewaschen. Das gewaschene Produkt wird getrocknet, vorzugsweise durch Sprühtrocknung, und gegebenenfalls bei etwa 600 bis 850°C calciniert. Das calcinierte Produkt wird im allgemeinen gemahlen.

Gegenstand der Erfindung ist ferner der Verwendung des erfindungsgemäßen Adsorbens zur Behandlung von pflanzlichen oder tierischen Ölen und/oder Fetten bzw. von Mineralölen.

Die in den Ansprüchen angegebenen Definitonsmerkmale werden wie folgt bestimmt:

1. Spezifische Oberfläche: nach der BET-Methode (Einpunktmethode mit Stickstoff nach DIN 66 131; vorherige Entgasung bei 110°C über 2 Stunden).

2. Ionenumtauschfähigkeit (IUF): 2 g des bei 100°C getrockneten Trägermaterials werden mit 100 ml einer 2-normalen $NH_4Cl$-Lösung 1 Stunde unter Rückfluß gekocht. Nach 16-stündigem Stehen wird die Probe abfiltriert und mit etwa 800 ml destilliertem Wasser gewaschen, bis im letzten Waschwasser mit Neßler's Reagens keine $NH_4$-Ionen mehr nachgewiesen werden können.

Die gewaschene Probe wird eine Stunde bei 110°C getrocknet, gemahlen, nochmals eine Stunde bei 110°C getrocknet, worauf sie in Schwefelsäure aufgeschlossen und der $NH_4$-Gehalt nach Kjehldahl bestimmt wird. Die IUF (mVal/100 g Probe) entspricht dem $NH_4$-Äquivalent.

Die Gesamt-IUF sowie der Anteil der austauschfähigen Kationen an der Gesamt-IUF des Adsorbens wird in der gleichen Weise bestimmt.

Nach dieser Methode werden nur die Kationen aus den Zwischengitterplätzen ausgetauscht. Die in den Schichtlamellen gebundenen Kationen ($Al^{3+}$, $Fe^{3+}$, $Mg^{2+}$) gehen nicht in Lösung.

3. Porenvolumen: Das Mikroporenvolumen (von Poren mit einem Durchmesser d = 0 bis 80 nm) des Adsorbens bzw. des Trägermaterials wird dadurch bestimmt, daß man Tetrachlorkohlenstoffdampf auf diese Substanzen einwirken läßt und die Gewichtszunahme durch die Tetrachlorkohlenstoff-Adsorption feststellt. Um Poren mit einem bestimmten Durchmesser zu erfassen, wird der Dampfdruck der Tetrachlorkohlenstoffs durch Zusatz bestimmter Menge an Paraffin zum flüssigen Tetrachlorkohlenstoff erniedrigt. Im einzelnen wird die Bestimmung so durchgeführt, daß eine Probe von 1 bis 2 g in einem Wägegläschen bei 130°C im Trockenschrank getrocknet wird. Das Wägegläschen mit der genau gewogenen Probe wird in einem Vakuum-Exsikkator gestellt, der zur Bestimmung der Poren von 0 bis 80 nm ein Gemisch aus 26 ml Paraffin und 184 ml Tetrachlorkohlenstoff enthält. Der mit graduierter Kühlfalle, Manometer und Vakuum verbundene Exsikkator wird bis zum Sieden des Inhalts evakuiert. Es werden 10 ml Tetrachlorkohlenstoff verdampft und in der Kühlfalle aufgefallen. Sodann läßt man den Exsikkatorinhalt 16 Stunden bei Raumtemperatur ausgleichen, worauf man langsam Luft in den Exsikkator läßt. Das Wägegläschen wird sofort verschlossen und zurückgewogen.

Die Werte werden in mg $CCl_4$-Adsorption pro g Substanz durch Gewichtszunahme errechnet. Durch Dividieren mit der Dichte des Tetrachlorkohlenstoffs ($d = 1,595$ g/cm$^3$ bei 20°C) ergibt sich das Porenvolumen in ml/g Substanz:

$$\frac{\text{Gewichtszunahme}}{\text{Einwaage x Dichte CCl}_4}$$

4. <u>pH-Wert</u>: Die angegebene Methode ist bei H.A. Benesi, R.U. Bonnar et al., Analytical Chemistry Dez. 1955, Bd. 27, Seite 1963, beschrieben.

8 g Trägermaterial werden in 100 ml entionisiertem Wasser dispergiert. Nach kurzem Aufkochen wird auf Raumtemperatur abgekühlt. Der pH-Wert der abgekühlen Suspension wird mit einer pH-Elektrode gemessen.

Die Erfindung ist durch die nachstehenden Beispiele erläutert.

<u>Beispiel 1</u>

Es wurde ein naturaktiver Bentonit-Rohton mit folgenden Eigenschaften eingesetzt:

| | |
|---|---|
| IUF (mVal/100 g) | 39 |
| spez. Oberfläche (m$^2$/g) | 150 |
| Porenvolumen (0 - 80 nm, ml/g) | 0,3 |
| pH-Wert | 5,3 |

Die Äquivalente der austauschfähigen Kationen sowie die Gesamt-IUF sind in Tabelle I (unter 1 b) angegeben.

100 g Rohton (bezogen auf Trockensubstanz) wurden in 500 ml Wasser dispergiert. Dann wurden 20 g $Al_2(SO_4)_3 \cdot 18\ H_2O$ (12-facher molarer Überschuß, bezogen auf Gesamt-IUF) zugegeben. Der pH-Wert wurde mit 2n $H_2SO_4$ auf pH 2 eingestellt. Die Suspension wurde 1 h bei 50°C gerührt. Es wurde filtriert und 2 x mit je 200 ml $H_2O$ (dest.) gewaschen. Anschließend wurde im Trockenschrank getrocknet und vermahlen (Beispiel 1a). Das erhaltene Produkt wurde mit getrocknetem und vermahlenem Rohbentonit (Beispiel 1b) verglichen.

Es wurden die Gesamt-Ionenumtauschfähigkeit (IUF) und der Anteil der austauschfähigen Kationen an der IUF bestimmt. Die Ergebnisse sind in Tabelle I angegeben.

Tabelle I

| | 1a | 1b |
|---|---|---|
| IUF (mVal/100 g) | 39 | 39 |

Tabelle I (fortgesetzt)

|  |  | 1a | 1b |
|---|---|---|---|
| austauschf. | $Na^+$ | < 0,5 | 0,6 |
|  | $K^+$ | 0,8 | 1,0 |
|  | $Ca^{2+}$ | 5,1 | 37 |
|  | $Mg^{2+}$ | 3,0 | 14 |
|  | $Al^{3+}$ | 23,7 | 2,6 |
|  | $Fe^{3+}$ | 6,6 | 6,4 |
| Summe der Kationen: |  | $\overline{39,7}$ | $\overline{69,6}$ |

Die Summe der IUF der austauschfähigen Kationen bei Beispiel 1a entspricht im Rahmen der Methodengenauigkeit der GesamtIUF. Die Summe der eingetauschten Lewis-Säure-Kationen ($Al^{3+}$ und $Fe^{3+}$) beträgt 30,3 mVal/100 g (77% aller austauschfähigen Kationen). Die Summe der IUF der ausgetauschten Kationen bei Beispiel 1b übersteigt die Gesamt-IUF. Dies ist darauf zurückzuführen, daß bei der Bestimmung der IUF (Rückflußkochen mit $NH_4Cl$) auch Begleitmineralien (z.B. $CaCO_3$) gelöst werden, deren Kationen sich zusätzlich zu den ausgetauschten Kationen im Filtrat wiederfinden (vorwiegend $Ca^{2+}$). Dies ist bei Beispiel 1a nicht der Fall, weil die löslichen Kationen bereits bei der Behandlung mit der sauren Aluminiumsulfatlösung gelöst und anschließend abfiltriert werden. Bei Beispiel 1b beträgt die Summe der Lewis-Säure-Kationen ($Al^{3+}$ und $Fe^{3+}$) 9,0 mVal/100g (23% aller austauschfähigen Kationen).

Bleichversuche

Bleichung von Leinöl

80 g filtriertes, rohes Leinöl werden in ein 250 ml-Becherglas eingewogen. Nach dem Eintragen von 2,5% Adsorbens wird 30 min im siedenden Wasserbad erwärmt.
Dann wird über eine Vakuumfilternutsche filtriert. Das Öl wird abschließend noch durch ein Faltenfilter filtriert.
Zur Bewertung der Bleichwirkung wird das Öl am Photometer (Hitachi U-1000-Spektralphotometer) bezüglich Transmission bei 460 nm vermessen. Die Ergebnisse sind in Tabelle II angegeben.

Tabelle II

| Bleichwirkung in Leinöl | |
|---|---|
| Beispiel | Transmission (%), 460 nm Küvette: 1 cm |
| 1a | 19 |
| 1b | 11 |

Bleichung von Palmöl

80 g rohes, filtriertes Palmöl (bei etwa 50°C geschmolzen) werden in einem 250 ml-Dreihalskolben vorgelegt. Zum Öl werden 2,5 % Bleichmittel gegeben. Nun wird ein Vakuum von 50 mbar eingestellt. Unter Rühren wird mit einem Heizpilz auf 120°C aufgeheizt. Nach Erreichen der Temperatur wird 30 min weitergerührt. Dann läßt man unter Rühren im Vakuum auf 80°C abkühlen. Anschließend wird über eine Vakuumfilternutsche filtriert und über ein Faltenfilter nachfiltriert.
Die Aufhellung des Öls wurde durch Ermittlung der Lovibond-Farbzahlen ermittelt. Für die Messung wurde eine 5 1/4 "-Küvette verwendet. Die Ergebnisse sind in Tabelle III angegeben.

Tabelle III

| Beispiel | Lovibond-Farbzahl | |
|---|---|---|
| | R (rot) | Y (gelb) |
| 1 a | 19 | 70 |
| 1 b | 22 | 70 |

Das erfindungsgemäße Adsorbens (Beispiel 1a) zeigt einen besseren Rotwert als das Trägermaterial (Beispiel 1b).

Beispiel 2

100 g Filterkuchen einer säureaktivierten Bleicherde mit einer spezifischen Oberfläche von 250 m$^2$/g, einer IUF von 31,5 mVal/100 g und einem Porenvolumen von 0,35 ml/g (Filtergut-Vorprodukt von Tonsil Optimum $^®$, Süd-Chemie AG) werden in 500 ml einer 4 %-igen $Al_2(SO_4)_3$-Lösung suspendiert (12-facher molarer Überschuß, bezogen auf Gesamt-IUF). Der pH-Wert wird mit $H_2SO_4$ auf 2 eingestellt. Die Suspension wird 1 h bei 50°C gerührt und anschließend

a) 2 x mit je 200 ml $H_2O$ (dest.) gewaschen (Beispiel 2a)
b) nicht gewaschen (Beispiel 2b)

Zum Vergleich wurde ein Teil des Filterkuchens zurückbehalten (Beispiel 2c). Die Produkte wurden im Trockenschrank 1 Stunde bei 110°C getrocknet und vermahlen. Es wurden die Äquivalente der austauschfähigen Kationen sowie die Gesamt-IUF bestimmt.

Tabelle IV

| Gesamt-IUF und austauschfähige Kationen | | | | |
|---|---|---|---|---|
| | | Filterkuchen | | |
| | | 2 c | 2 a | 2 b |
| IUF (mVal/100g) | | 32 | 31,5 | 31,9 |
| austauschf. | Na$^+$ | 0,76 | < 0,5 | < 0,5 |
| | K$^+$ | 0,61 | < 0,5 | 0,62 |
| | Ca$^{2+}$ | 7,44 | 0,77 | 1,33 |
| | Mg$^{2+}$ | 4,10 | 0,84 | 1,11 |
| | Fe$^{3+}$ | 2,59 | 2,58 | 3,15 |
| | Al$^{3+}$ | 16,74 | 28,55 | 62,06 |
| Summe der Kationen | | 32,24 | 32,74 | 68,27 |
| pH-Wert | | 3,1 | 3,0 | 2,1 |

Die Gesamt-IUF aller Proben ist mit etwa 32 mVal/100g unverändert. Der Anteil der austauschfähigen Al$^{3+}$-Ionen im Bleicherde-Filterkuchen (2c) beträgt etwa 50%. Der Anteil der austauschfähigen Ca$^{2+}$-Ionen beträgt 23%, der Anteil der austauschfähigen Mg$^{2+}$-Ionen 13% und der der austauschfähigen Fe$^{3+}$-Ionen 8%. Nach dem Ioneneintausch von Al$^{3+}$ und nachfolgendem Waschen (2a) sind folgende Ionen im angegebenen Prozentsatz enthalten:

| Al$^{3+}$: | 89 % |
|---|---|
| Fe$^{3+}$: | 8 % |

(fortgesetzt)

| | |
|---|---|
| $Mg^{2+}$: | 2,6 % |
| $Ca^{2+}$: | 2,4 % |
| | $\overline{102\ \%}$ |

Der Überschuß von 2% liegt innerhalb der Fehlergrenze der Methode.

Bei der Probe von Beispiel 2b zeigt sich ein beträchtlicher Überschuß an $Al^{3+}$, d.h. es haftet überschüssiges Al-Salz an der Oberfläche der Bleicherde an und täuscht eine hohe $Al^{3+}$ IUF vor. Das Al-Salz belegt die zur Bleichung von Ölen benötigten Poren.

Die Proben aus 2a, 2b und 2c werden wie folgt zur Ölbleichung verwendet:

- Leinöl: Einzelheiten zur Bleichprozedur siehe Beispiel 1.

- Palmöl, roh, wird vorgelegt. Zugabe von 1,5 % Bleicherde. Behandlung bei T = 120°C, t = 30 min, p = 50 mbar), Einzelheiten zur Bleichprozedur siehe Beispiel 1.

- Sojaöl, entschleimt, wird vorgelegt. Zugabe von 0,5 % Bleicherde. Behandlung bei T = 90°C, t = 30 min, p = 20 mbar

- Rapsöl, entschleimt, wird vorgelegt. Zugabe von 0,5 % Bleicherde. Behandlung bei T = 110°C, t = 30 min, p = 20 mbar.

Die behandelten Öle werden abgekühlt, das Reaktionsgefäß belüftet und filtriert. Die erhaltenen Öle werden am Lovibond-Gerät bzw. am Photometer (Leinöl) vermessen:

Die Ergebnisse sind in Tabelle V angegeben.

Tabelle V

| Bleichwirkung | | | | |
|---|---|---|---|---|
| Probe | | 2 c | 2 a | 2 b |
| Leinölbleichung | | | | |
| Transmission (%) (460 nm) | | 44 | 49 | 44 |
| Palmölbleichung (120°C 50 mbar 30 min) | | | | |
| Lovibond | rot | 27 | 21 | 26 |
| | gelb | 70 | 63 | 70 |
| Sojaölbleichung (90°C 20 mbar 30 min) | | | | |
| Lovibond | rot | 4,3 | 4,1 | 4,4 |
| | gelb | 70 | 70 | 70 |
| ppm (Chlorophyll A) | | 0,16 | 0,16 | 0,15 |
| Rapsölbleichung (110°C 20 mbar 30 min) | | | | |
| Lovibond | rot | 3,3 | 3,0 | 3,2 |
| | gelb | 70 | 69 | 63 |
| ppm (Chlorophyll A) | | 0,12 | 0,11 | 0,13 |

Die Probe 2a ist der Bleichwirkung der Probe 2c in allen Ölen überlegen. Dies ist bei Palmöl und Leinöl besonders signifikant. Die Probe 2b zeigt keine Verbesserung gegenüber der Probe 2c. Dies belegt die Notwendigkeit des Waschens nach dem Ioneneintausch, da ansonsten das überschüssige Al-Salz die Poren der Bleicherde belegt und sich der positive Effekt des $Al^{3+}$-Eintausches und die Herabsetzung des Porenvolumens bezüglich der resultierenden Bleichaktivität gegenseitig aufheben.

8

Beispiel 3

100 g Filterkuchen einer säureaktivierten Bleicherde mit einer spezifischen Oberfläche von 250 $m^2$/g, einer IUF von 29 mVal/100 g und einem Porenvolumen von 0,35 ml/g (Filtergut-Vorprodukt von Tonsil Optimum ®, Süd-Chemie AG) werden in 500 ml einer 2,45 %-igen $ZnCl_2$-Lösung suspendiert (13-facher molarer Überschuß).
Der pH-Wert wird mit $H_2SO_4$ auf 2 eingestellt. Die Suspension wird 1 h bei 50°C gerührt und anschließend

a) 2 x mit je 200 ml $H_2O$ (dest.) gewaschen (Beispiel 3a)
b) nicht gewaschen (Beispiel 3b)

Zum Vergleich wurde ein Teil des Filterkuchens zurückbehalten (Beispiel 3c). Die Produkte wurden im Trockenschrank 1 Stunde bei 110°C getrocknet und vermahlen. Es wurden die Äquivalente der austauschfähigen Kationen sowie die Gesamt-IUF bestimmt.

Tabelle VI

| Gesamt-IUF und austauschfähige Kationen | | | | |
|---|---|---|---|---|
| | | Filterkuchen | | |
| | | 3 c | 3 a | 3 b |
| IUF (mVal/100g) | | 29 | 29 | 29 |
| austauschf. | $Na^+$ | < 0,5 | < 0,5 | < 0,5 |
| | $K^+$ | 0,6 | 0,6 | 0,6 |
| | $Ca^{2+}$ | 6,8 | 2,8 | 1,6 |
| | $Mg^{2+}$ | 4,3 | 1,6 | 1,3 |
| | $Fe^{3+}$ | 0,9 | 0,9 | 0,9 |
| | $Al^{3+}$ | 12,5 | 12,7 | 12,1 |
| | $Zn^{2+}$ | < 0,5 | 8,3 | 34,2 |
| Summe der Kationen | | <26,1 | <27,4 | <51,2 |
| pH-Wert: | | 3,0 | 2,9 | 2,9 |

Die Proben aus 3a, 3b und 3c werden wie folgt zur Ölbleichung verwendet:

- Leinöl: Einzelheiten zur Bleichprozedur vergl. Beispiel 1
- Palmöl: Bleichbedingungen wie bei Beispiel 2. Einzelheiten zur Bleichprozedur vergl. Beispiel 1
- Rapsöl: Bleichbedingungen wie bei Beispiel 2. Einzelheiten siehe Bleichprozedur vergl. Beispiel 1

Die Ergebnisse sind in Tabelle VII angegeben.

Tabelle VII

| Bleichwirkung | | | | |
|---|---|---|---|---|
| Probe | | 3 c | 3 a | 3 b |
| Leinölbleichung | | | | |
| Transmission (%) (460 nm) | | 36 | 40 | 31 |
| Palmölbleichung (90°C, 20 mbar, 30 min) | | | | |
| Lovibond | rot | 18,5 | 17,2 | 21,1 |
| | gelb | 70 | 70 | 63 |
| Rapsölbleichung (110°C 20 mbar 30 min) | | | | |
| Lovibond | rot | 3,2 | 2,6 | 2,9 |
| | gelb | 70 | 70 | 70 |

Die Probe 3a ist in der Bleichwirkung der Probe 3c in allen Ölen überlegen. Die Probe 3b zeigt gegenüber der Probe 3c in Leinöl und Palmöl eine Verschlechterung, in Rapsöl eine Verbesserung, die jedoch an Probe 3a nicht heranreicht. Auch hier zeigt sich der entscheidende Einfluß des Waschprozesses.

Beispiel 4

In Anlehnung an Beispiel 9 aus der DE-A-2 036 818 wird ein für die Bleichung von Pflanzenölen geeignetes synthetisches Adsorbens wie folgt hergestellt:

5,6 kg $Al_2(SO_4)_3 \cdot 18 H_2O$ werden in 14 Liter $H_2O$ (dest.) gelöst und unter Rühren zum Sieden erhitzt. Innerhalb von 30 min werden 2,4 kg Wasserglaslösung (37/40 °Bé), gelöst in 14 Liter $H_2O$ (dest.), langsam zudosiert. Es wird 4 h unter Rückflußkochen weitergerührt.

Das Flokkulat wird filtriert und gewaschen. Das erhaltene Filtergut wird in 2 Hälften geteilt: Die erste Hälfte wird in etwa 10 Liter $H_2O$ suspendiert und sprühgetrocknet (Beispiel 4a, Vergleichsbeispiel). Die zweite Hälfte wird analog zu Beispiel 1 und 2 in einer 4 %-igen $Al_2(SO_4)_3$-Lösung suspendiert und eine Stunde unter Rühren auf 50°C erwärmt. Dann wird filtriert, gewaschen und sprühgetrocknet (Beispiel 4b, Erfindungsbeispiel). Beide Produkte wurden abschließend bei 700°C eine Stunde calciniert, abgekühlt und vermahlen.

Es werden die Äquivalente der austauschfähigen Kationen sowie die Gesamt-IUF bestimmt:

Tabelle VIII

| | 4a | 4b |
|---|---|---|
| IUF (mVal/100g) | 54 | 54 |
| austauschfähige Kationen | | |
| $Ca^{2+}$ | 2 | 1 |
| $Mg^{2+}$ | 2 | 1 |
| $Al^{3+}$ | 25 | 44 |
| $Na^+$ | 26 | 7 |
| Summe der Kationen | 55 | 53 |
| pH-Wert | 4,0 | 3,1 |

Bleichversuche

Die Produkte 4a und 4b werden zur Bleichung von Leinöl, Palmöl und Rapsöl eingesetzt:

Leinöl

T = 100°C, t = 30 min, 2,5 % Bleichmittel

Palmöl

T = 120°C, t = 30 min, p = 50 mbar, 2,5 % Bleichmittel

Rapsöl

T = 110°C, t = 30 min, p = 20 mbar, 0,5 % Bleichmittel

Einzelheiten über die Durchführung der experimentellen Bleichung finden sich in den Beispielen 1 bis 3. Die Ergebnisse sind in Tabelle XI angegeben.

Tabelle XI

|  |  | 4a | 4b |
|---|---|---|---|
| Leinölbleichung |  |  |  |
| (%) Transmission) (460 nm) |  | 47 | 53 |
| Palmölbleichung |  |  |  |
| Lovibond | rot (R) | 40 | 36 |
|  | gelb (Y) | 70 | 57 |
| Rapsölbleichung |  |  |  |
| Lovibond | rot (R) | 5,3 | 4,3 |
|  | gelb (Y) | 70 | 70 |

Der Vergleich zwischen den Proben 4a und 4b zeigt eindeutig bessere Bleicheigenschaften des Produktes, bei dem $Al^{3+}$-Ionen eingetauscht wurden.

**Patentansprüche**

1. Adsorbens auf der Basis eines anorganischen Trägermaterials mit austauschfähigen ein- und zweiwertigen Kationen, dadurch gekennzeichnet, daß die spezifische Oberfläche des Trägermaterials >100 $m^2$/g, seine Kationenumtauschfähigkeit >30 mVal/100 g, sein Porenvolumen >0,15 ml/g ist, der pH-Wert einer wäßrigen Suspension von 8 g Trägermaterial in 100 ml $H_2O$ <7,5 ist, und daß mindestens 60%, vorzugsweise mindestens 70% der austauschfähigen ein- und/oder zweiwertigen Kationen durch als Lewis-Säuren wirkende Kationen, vorzugsweise $Al^{3+}$-Kationen, ausgetauscht sind.

2. Adsorbens nach Anspruch 1, dadurch gekennzeichnet, daß das Trägermaterial einen naturaktiven Ton auf Smektitbasis mit einer spezifischen Oberfläche von >100 $m^2$/g, einer Kationenumtauschfähigkeit von >30 mVal/100 g, einem Porenvolumen von >0,15 ml/g darstellt, und der pH-Wert einer wäßrigen Suspension von 8 g Trägermaterial in 100 ml Wasser einen pH-Wert von <7,5 hat.

3. Adsorbens nach Anspruch 1, dadurch gekennzeichnet, daß das Trägermaterial ein säureaktiviertes Tonmineral auf Smektitbasis mit einer spezifischen Oberfläche von > 200 $m^2$/g, einer Kationenumtauschfähigkeit von 30 bis 50 mVal/100 g, einem Porenvolumen von >0,25 ml/g darstellt und der pH-Wert einer wäßrigen Suspension von 8 g Trägermaterial in 100 ml Wasser etwa 2 bis 6 beträgt.

4. Adsorbens nach Anspruch 1, dadurch gekennzeichnet, daß das Trägermaterial eine synthetische Bleicherde auf der Grundlage eines Aluminiumsilicats mit einer spezifischen Oberfläche von >300 $m^2$/g, vorzugsweise 300 bis 600 $m^2$/g einer Kationenumtauschfähigkeit von etwa 30 bis 60 mVal/100 g, einem Porenvolumen von > 0,2 ml/g darstellt, und der pH-Wert einer wäßrigen Suspension von 8 g Trägermaterial in 100 ml $H_2O$ 3 bis 6 beträgt.

5. Verfahren zur Herstellung des Adsorbens nach einem der Ansprüche 1 bis 4, dadurch gekennzeichnet, daß man das Trägermaterial mit der Lösung eines Salzes mit einem als Lewis-Säure wirkenden Kation, vorzugsweise mit einer Aluminiumsalzlösung behandelt, wobei der molare Überschuß an Lewis-Säure-Kationen mindestens das 2-fache der Kationenumtauschfähigkeit des Trägermaterials beträgt, worauf man die überschüssige Salzlösung entfernt, den Rückstand wäscht, trocknet und gegebenenfalls calciniert.

6. Verfahren nach Anspruch 5, dadurch gekennzeichnet, daß man den mit Lewis-Säure-Kationen beladenen Rückstand wäscht, bis der Gehalt an freien Kationen im Waschwasser < 100 mg/Liter ist.

7. Verwendung des Adsorbens nach einem der Ansprüche 1 bis 4, bzw. des nach dem Verfahren nach einem der Ansprüche 5 und 6 hergestellten Adsorbens zur Behandlung von pflanzlichen oder tierischen Ölen und/oder Fetten bzw. von Mineralölen.

## Claims

1. An adsorbent based on an inorganic support material with exchangeable mono and divalent cations, characterized in that the specific surface area of the support material is >100 $m^2$/g, its cation-exchange capacity is >30 mVal/100 g, its pore volume is >0.15 ml/g, the pH value of an aqueous suspension of 8 g of support material in 100 ml $H_2O$ is <7.5, and in that at least 60 %, preferably at least 70 %, of the exchangeable mono and/or divalent cations are exchanged by cations which act as Lewis acids, preferably $Al^{3+}$ cations.

2. An adsorbent according to Claim 1, characterized in that the support material is a naturally active clay based on smectite with a specific surface area of >100 $m^2$/g, a cation-exchange capacity of >30 mVal/100 g, a pore volume of >0.15 ml/g, and the pH value of an aqueous suspension of 8 g of the support material in 100 ml of water has a pH value of <7.5.

3. An adsorbent according to claim 1, characterized in that the support material is an acid-activated mineral clay based on smectite with a specific surface area of >200 $m^2$/g, a cation-exchange capacity of 30 to 50 mVal/100 g, a pore volume of >0.25 ml/g, and the pH value of an aqueous suspension of 8 g of the support material in 100 ml of water is approximately 2 to 6.

4. An adsorbent according to Claim 1, characterized in that the support material is a synthetic bleaching clay based on an aluminium silicate with a specific surface area of >300 $m^2$/g, preferably 300 to 600 $m^2$/g, a cation-exchange capacity of approximately 30 to 60 mVal/100 g, a pore volume of >0.2 ml/g, and the pH value of an aqueous suspension of 8 g of the support material in 100 ml of $H_2O$ is 3 to 6.

5. A method of preparing the adsorbent according to any one of claims 1 to 4, characterised in that the support material is treated with a solution of a salt with a cation which acts as a Lewis acid, preferably with an aluminium salt solution, wherein the molar excess of Lewis acid cations is at least twice the cation-exchange capacity of the support material, whereupon the excess salt solution is removed, the residue washed, dried and optionally calcined.

6. A method according to claim 5, characterised in that the residue loaded with Lewis acid cations is washed until the content of free cations in the wash water is <100 mg/litre.

7. Use of the adsorbent according to any one of Claims 1 to 4 or of the adsorbent prepared according to the method in accordance with any one of Claims 5 and 6 to treat vegetable or animal oils and/or fats or mineral oils.

## Revendications

1. Adsorbant à base d'un matériau support minéral, avec des cations monovalents et divalents ayant une capacité d'échange, caractérisé en ce que l'aire spécifique du matériau support est > 100 $m^2$/g, sa capacité d'échange de cations est > 30 mVal/100 g, son volume de pores est >0,15 ml/g, le pH d'une suspension aqueuse de 8 g du matériau support dans 100 ml de $H_2O$ est < 7,5, et en ce qu'au moins 60 %, et de préférence au moins 70 % des cations monovalents et/ou divalents ayant une capacité d'échange, sont remplacés par des cations agissant comme des acides de Lewis, de préférence des cations $Al^{3+}$.

2. Adsorbant selon la revendication 1, caractérisé en ce que le matériau support est une argile active naturelle à base de smectite, ayant une aire spécifique > 100 $m^2$/g, une capacité d'échange de cations > 30 mVal/100 g, un volume de pores > 0,15 ml/g, le pH d'une suspension aqueuse de 8 g du matériau support dans 100 ml d'eau ayant un pH < 7,5.

3. Adsorbant selon la revendication 1, caractérisé en ce que le matériau support est un produit minéral argileux activé par un acide, à base de smectite, ayant une aire spécifique > 200 m$^2$/g, une capacité d'échange de cations de 30 à 50 mVal/100 g, un volume de pores > 0,25 ml/g, et le pH d'une suspension aqueuse de 8 g du matériau support dans 100 ml d'eau est d'environ 2 à 6.

4. Adsorbant selon la revendication 1, caractérisé en ce que le matériau support est une terre décolorante synthétique à base d'un silicate d'aluminium, ayant une aire spécifique > 300 m$^2$/g, de préférence de 300 à 600 m$^2$/g, une capacité d'échange de cations d'environ 30 à 60 mVal/100 g, un volume de pores > 0,2 ml/g, et le pH d'une suspension aqueuse de 8 g du matériau support dans 100 ml de H$_2$O est de 3 à 6.

5. Procédé pour fabriquer l'adsorbant selon l'une des revendications 1 à 4, caractérisé en ce qu'on traite le matériau support avec la solution d'un sel comportant un cation jouant le rôle d'un acide de Lewis, de préférence avec une solution d'un sel d'aluminium, l'excès en moles de cations acide de Lewis étant au moins double de la capacité d'échange de cations du matériau support, ce après quoi on élimine la solution de sel en excès, on lave le résidu, on le sèche, et éventuellement on le calcine.

6. Procédé selon la revendication 5, caractérisé en ce qu'on lave le résidu chargé de cations d'acide de Lewis jusqu'à ce que la teneur de l'eau de lavage en cations libres soit < 100 mg/litre.

7. Utilisation de l'adsorbant selon l'une des revendications 1 à 4, ou de l'adsorbant fabriqué par le procédé selon l'une des revendications 5 et 6, pour traiter des huiles/ou graisses végétales ou animales, ou des huiles minérales.